# EUROPÄISCHE PATENTSCHRIFT

(11) **EP 0 971 186 B1**
(45) Veröffentlichungstag und Bekanntmachung des Hinweises auf die Patenterteilung: **20.08.2003**
(21) Anmeldenummer: 99112126.0
(22) Anmeldetag: 23.06.1999
(51) Int. Cl.: F25D 27/00, F21K 7/00

(54) **Innenbeleuchtung für Kühlgerät**
Interior lighting for refrigerator
Eclairage intérieur pour réfrigérateur

(30) Priorität: 08.07.1998 DE 29812188 U; 07.08.1998 DE 29814243 U
(43) Veröffentlichungstag der Anmeldung: 12.01.2000
(73) Patentinhaber: Liebherr-Hausgeräte Ochsenhausen GmbH, 88416 Ochsenhausen (DE)
(72) Erfinder: Gerner, Herbert, 88416 Erlenmoos (DE)
(74) Vertreter: Laufhütte, Dieter, Dr.-Ing.

(56) Entgegenhaltungen:
- EP-A- 0 751 340
- WO-A-98/14740
- DE-U- 29 717 444
- US-A- 2 515 584
- US-A- 4 667 481
- US-A- 5 027 258
- US-A- 5 607 227
- PATENT ABSTRACTS OF JAPAN vol. 1997, no. 03, 31. März 1997 (1997-03-31) -& JP 08 315621 A (SHARP CORP), 29. November 1996 (1996-11-29)

## Beschreibung

Die Erfindung betrifft ein Kühlgerät zum Kühlen und/oder Gefrieren von Waren mit mindestens einem Kühlraum, nach dem Oberbegriff des Anspruchs 1. So ein Kühlgerät ist aus DE-U- 297 17 444 bekannt.

Die Innenbeleuchtung eines derartigen Kühlgerätes besteht dabei üblicherweise aus einer Glühbirne, die beim Öffnen des Kühlgerätes durch einen Türschalter mit einem Stromkreis verschaltet wird. Der Nachteil einer Innenbeleuchtung mit einer Glühbirne besteht allerdings darin, daß die Glühbirne in dem Kühlraum unnötige Wärme produziert, eine im Bezug auf den Nutzinhalt ungünstige Baugröße erfordert und daß der Einsatz von Glühbirnen in explosionsgefährdeter Umgebung einen höheren Aufwand erfordert.

Ein weiterer Nachteil besteht darin, daß die Glühbirne über die Lebensdauer des Kühlgerätes gesehen mitunter einige male ausgetauscht werden muß.

Bereits aus der DE 297 17 444 U ist ein Kühlgerät zum Kühlen und/oder Gefrieren von Waren mit mindestens einem Kühlraum bekannt, der eine aus einer Leuchtdiode bestehende Innenbeleuchtung aufweist. Diese Leuchtdioden sind entlang eines über den Innenraum des Kühlgeräts hinweg ragenden Vorsprung montiert.

Es sind hier also eigens Vorsprünge zur Montage der Leuchtmittel vorzusehen.

Aufgabe der Erfindung ist es, ein Kühlgerät mit einer Innenbeleuchtung zu schaffen, bei dem die Innenbeleuchtung einerseits eine lange Lebensdauer aufweist und funktionssicher ausgestaltet ist und andererseits die Erzielung neuer und interessanter Lichteffekte bei der Ausleuchtung des Kühlraums ermöglicht.

Diese Aufgabe wird durch die Merkmale des Anspruchs 1 gelöst. Die erfindungsgemäße Lösung besteht darin, daß die mindestens eine Leuchtdiode in Führungsschienen einer Glasplatte derart eingelassen ist, dass das ausgesendete Licht in die Glasplatte einkoppelbar ist. Auf diese Weise entsteht neben der Beleuchtung des Innenraums ein interessanter Lichteffekt an der Glasplatte.

Leuchtdioden werden üblicherweise bei elektrischen Geräten zur Anzeige von bestimmten Zuständen verwendet, allerdings ist es noch nicht sehr verbreitet, Leuchtdioden für Beleuchtungszwecke einzusetzen. Die Erfindung beruht auf der Erkenntnis, dass in dem dunklen Kühlraum bereits eine oder wenige Leuchtdioden ausreichen, um die interessierenden Bereiche des Innenraums entsprechend auszuleuchten. Hierbei werden vorzugsweise lichtstarke Leuchtdioden verwendet, wobei in jüngster Zeit auch Leuchtdioden mit weißem Licht erhältlich sind.

Gegenüber herkömmlichen Glühbirnen ergeben sich durch die Beleuchtung mit Leuchtdioden in dem Innenraum vielfältige Vorteile. Zum einen weisen Leuchtdioden üblicherweise eine längere Lebensdauer gegenüber der Lebensdauer des Kühlgerätes auf, so daß eine Auswechslung der Leuchtdioden nicht erforderlich ist. Herkömmliche Glühbirnen ermöglichen zwar den direkten Anschluß an das 220 Volt-Netz, so daß ein zusätzlicher Transformator nicht erforderlich ist, allerdings werden bei den Kühlgeräten der neueren Generation ohnehin Steuerungen und elektronische Schaltungen eingesetzt, die ein entsprechendes Netzgerät erforderlich machen, so daß die Leuchtdioden direkt an die Spannungsversorgung der elektronischen Schaltung bzw. der Steuereinheit angeschlossen werden können. Ein weiterer Vorteil besteht schließlich darin, daß die Leuchtdioden eine niedrige Leistungsaufnahme aufweisen und damit keine unnötige Wärme in dem Kühlraum erzeugen.

Nach einer weiteren bevorzugten Ausführungsform ist eine Versenkung in einer der Seitenwände des Kühlraums vorgesehen, in der das Leuchtdioden-Array angeordnet ist. Auf diese Weise ragt die Beleuchtung nicht über die jeweilige Wandung in störender Weise hinaus.

Nach einer weiteren bevorzugten Ausführungsform sind mehrere Leuchtdioden in der Deckenwandung des Kühlraums vorgesehen, wobei die Leuchtdioden jeweils in kleine Reflektoren eingebracht sind. Besonders vorteilhaft ist es, wenn die kleinen Reflektoren aus einfachen Einstülpungen in der Deckenwandung bestehen, in die die Leuchtdioden jeweils mittig eingebracht sind. Auf diese Weise müssen keine zusätzlichen Reflektorelemente montiert werden, sondern die Einstülpungen können bereits beim Vergießen der Wandungen des Kühlraums vorgesehen vorgesehen sein.

Weitere Einzelheiten und Vorteile der Erfindung werden anhand eines in der Zeichnung dargestellten Ausführungsbeispiels offenbart. In dieser zeigt:
- Fig. 1: ein Kühlgerät mit der Innenbeleuchtung,
- Fig. 2: einen Schnitt durch eine Glasplattenführung mit integrierter Beleuchtung entlang der Linie II - II gemäß Fig. 3 und
- Fig. 3: eine Draufsicht auf die Glasplattenführung gemäß Fig. 2.

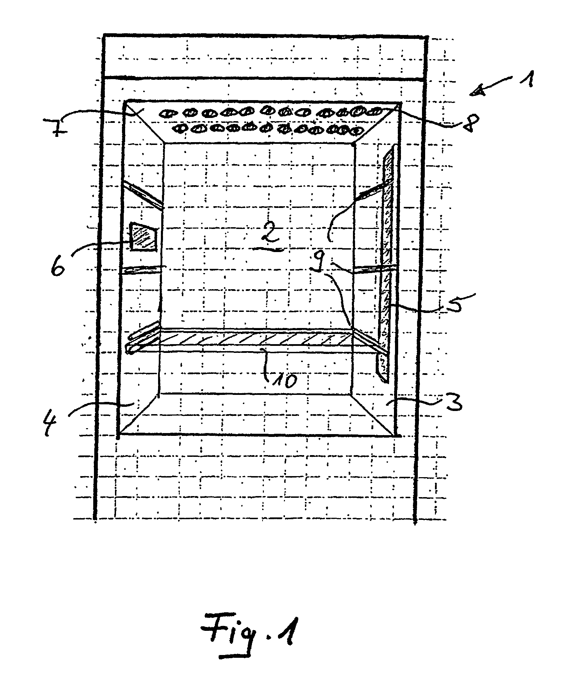

Fig. 1 zeigt ein Kühlgerät mit Innenbeleuchtung. Das Kühlgerät 1 weist einen Kühlraum 2 auf, wobei die Tür aus Vereinfachungsgründen nicht dargestellt ist. In den Seitenwänden 3 und 4 sind jeweils Versenkungen eingelassen, die durch diffuse Scheiben 5, 6 abgeschlossen sind. Hinter den diffusen Scheiben sind in die Versenkungen jeweils Leuchtdioden-Arrays eingelassen, so daß der Innenraum hierdurch seitlich beleuchtet wird. An der Deckenwandung sind Leuchtdioden in Vertiefungen der Deckenwandung eingelassen, wobei die Vertiefungen gleichzeitig als kleine Reflektoren für die Leuchtdioden dienen. An den Seitenwänden befinden sich außerdem Führungsschienen 9, auf denen jeweils Glasplatten 10 abgelegt werden können.

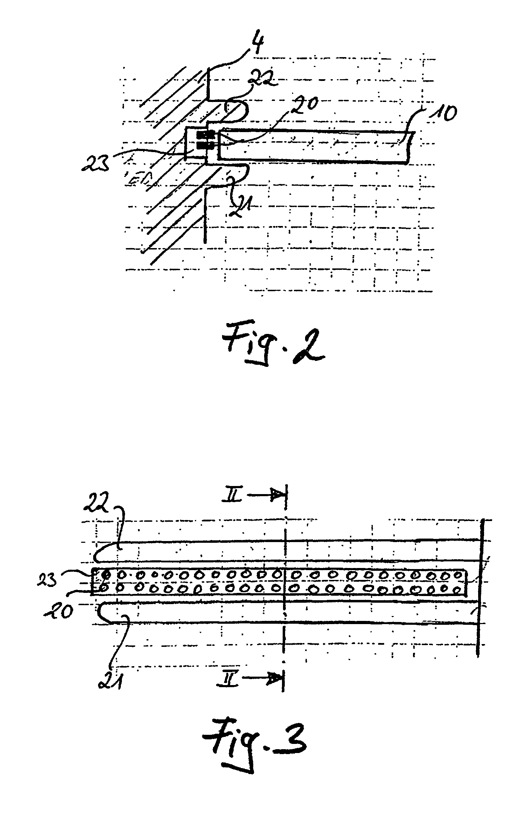

Fig. 2 zeigt einen Schnitt durch eine Glasplattenführung mit integrierter Beleuchtung entlang der Linie II - II gemäß Fig. 3. An der Wandung 4 sind zwei Führungen 21, 22 integriert, zwischen denen eine Glasscheibe 10 geführt ist. In der Aussparung 23 sind Leuchtdioden 20 eingelassen, wobei das von den Leuchtdioden abgegebene Licht in die Glasscheibe 10 eingekoppelt wird.

Fig. 3 zeigt die Draufsicht auf die Glasplattenführung gemäß Fig. 2. Demnach sind entlang der Aussparung 23 die Leuchtdioden 20 in Doppelreihe angeordnet. Neben der unteren Führung 21 für die Glasplatte befindet sich auch oberhalb der Beleuchtungsreihe eine Führung 22, wodurch die Glasplatte nicht nur besser gesichert ist, sondern wodurch auch das Licht der Leuchtdioden besser in die Glasplatte eingekoppelt wird.

## Patentansprüche

1. Kühlgerät zum Kühlen und/oder Gefrieren von Waren
mit mindestens einem Kühlraum (2), der eine Innenbeleuchtung bestehend aus mindestens einer Leutdiode (20) aufweist,
**dadurch gekennzeichnet,**
**daß** mindestens eine Leuchtdiode (20) in Führungen (21, 22) für eine Glasplatte (10) derart eingelassen ist, dass das ausgesendete Licht in die Glasplatte (10) einkoppelbar ist.

2. Kühlgerät nach Anspruch 1, **dadurch gekennzeichnet, daß** mehrere Leuchtdioden (20) zu einem Leuchtdioden-Array zusammengefaßt sind.

3. Kühlgerät nach Anspruch 1 oder 2, **dadurch gekennzeichnet, daß** zusätzlich mehrere Leutdioden (20) in der Deckenwandung des Kühlraums (2) vorgesehen sind.

4. Kühlgerät nach Anspruch 3, **dadurch gekennzeichnet, daß** die Leuchtdioden (20) jeweils in kleine Reflektoren eingebracht sind.

## Claims

1. Refrigerator for cooling and/or freezing goods, having at least one cooling space (2) which has interior lighting consisting of at least one light-emitting diode (20), **characterized in that** at least one light-emitting diode (20) is recessed in guides (21, 22) for a glass plate (10) in such a way that the emitted light can be coupled into the glass plate (10).

2. Refrigerator according to Claim 1, **characterized in that** a plurality of light-emitting diodes (20) are combined to form a light-emitting diode array.

3. Refrigerator according to Claim 1 or 2, **characterized in that** a plurality of light-emitting diodes (20) are additionally provided in the top wall of the cooling space (2).

4. Refrigerator according to Claim 3, **characterized in that** the light-emitting diodes (20) are respectively inserted into small reflectors.

## Revendications

1. Réfrigérateur pour réfrigérer et/ou congeler des marchandises, avec au moins une enceinte de réfrigération (2) qui présente un éclairage intérieur constitué d'au moins une diode luminescente (20), **caractérisé en ce qu'**au moins une diode luminescente (20) est insérée dans des guidages (21, 22) pour une plaque de verre (10) de façon que la lumière émise puisse être couplée dans la plaque de verre (10).

2. Réfrigérateur selon la revendication 1, **caractérisé en ce que** plusieurs diodes luminescentes (20) sont réunies en un groupement de diodes luminescentes.

3. Réfrigérateur selon la revendication 1 ou 2, **caractérisé en ce que** plusieurs diodes luminescentes (20) sont prévues de plus dans la paroi du plafond de l'enceinte de réfrigération (2).

4. Réfrigérateur selon la revendication 3, **caractérisé en ce que** les diodes luminescentes (20) sont introduites respectivement dans de petits réflecteurs.
